# EUROPÄISCHE PATENTSCHRIFT

(11) **EP 1 882 109 B1**
(45) Veröffentlichungstag und Bekanntmachung des Hinweises auf die Patenterteilung: **15.04.2009**
(21) Anmeldenummer: 06722842.9
(22) Anmeldetag: 06.05.2006
(51) Int. Cl.: F16C 33/60, F16C 33/62, F16C 33/64

(54) **WÄLZLAGERRING, INSBESONDERE FÜR HOCHBEANSPRUCHTE WÄLZLAGER IN FLUGZEUGTRIEBWERKEN, SOWIE VERFAHREN ZU DESSEN HERSTELLUNG**
ANTIFRICTION BEARING RACE, PARTICULARLY FOR HIGHLY STRESSED ANTIFRICTION BEARINGS IN AIRCRAFT POWER UNITS AND METHODS FOR THE PRODUCTION THEREOF
ANNEAU DE ROULEMENT DESTINE EN PARTICULIER A DES ROULEMENTS SOUMIS A DE FORTES CONTRAINTES DANS DES REACTEURS D'AVIONS, ET PROCEDE DE REALISATION

(30) Priorität: 18.05.2005 DE 102005022730
(43) Veröffentlichungstag der Anmeldung: 30.01.2008
(73) Patentinhaber: Schaeffler KG, 97421 Schweinfurt (DE)
(72) Erfinder: BEER, Oskar, 84032 Landshut (DE); STREIT, Edgar, 97711 Poppenlauer (DE)
(86) Internationale Anmeldenummer: PCT/DE2006/000784
(87) Internationale Veröffentlichungsnummer: WO 2006/122518

(56) Entgegenhaltungen:
- WO-A-20/05030417
- US-A- 3 665 585
- US-A- 3 772 935
- US-A1- 2003 019 106
- PATENT ABSTRACTS OF JAPAN Bd. 007, Nr. 291 (M-265), 27. Dezember 1983 (1983-12-27) -& JP 58 163821 A (FUJI SEIKOU KK), 28. September 1983 (1983-09-28)

## Beschreibung

### Gebiet der Erfindung

Die Erfindung betrifft einen Wälzlagerring nach den oberbegriffsbildenden Merkmalen des Patentanspruchs 1, der insbesondere geeignet ist für hochbeanspruchte Wälzlager in Flugzeugtriebwerken, sowie ein Verfahren zur Herstellung eines solchen Wälzlagerrings.

### Hintergrund der Erfindung

Dem Fachmann in der Triebwerktechnik von Flugzeugen ist es allgemein bekannt, dass für die Lagerringe von hoch beanspruchten Wälzlagern, wie beispielsweise die Hauptwellenlager von Flugzeugtriebwerken, wegen der hohen Betriebstemperaturen vor allem warmfeste Lagerwerkstoffe wie M50 (80 MoCr V 42-16, 1.3551) oder auch warmfeste Einsatzstähle wie M50 NiL (13MoCrNi 42-16-14, 1.3555) eingesetzt werden. Diese Werkstoffe weisen nach der Aufkohlung und Härtung im Bereich der Laufbahn eine hohe Härte und im nicht aufgekohlten Kernbereich des Lagerrings eine hohe Zähigkeit auf. Die Zusammensetzung dieser Werkstoffe ist aber bis auf den Kohlenstoffgehalt über den gesamten Querschnitt des Lagerrings konstant. Daher sind die unterschiedlichen Anforderungen an die Laufbahnen der Lagerringe, wie hohe Überrollfestigkeit und Verschleißfestigkeit, sowie an die Kernbereiche der Lagerringe, wie hohe Zähigkeit, nur in begrenztem Umfang zu verwirklichen.

Eine Möglichkeit, den hohen Anforderungen an Wälzlager in Flugzeugtriebwerken noch besser gerecht zu werden, ist es daher, die Wälzlagerringe jeweils aus einem festen Verbund zweier Schichten aus verschiedenen metallischen Werkstoffen herzustellen, das heißt, den Bereich der Laufbahn für die Wälzkörper aus einem Stahl mit sehr hoher Härte und Verschleißfestigkeit und der Kernbereich des Wälzlagerrings aus einem Stahl mit hoher Zähigkeit auszubilden.

Ein solcher Wälzlagerring aus einem Vebundwerkstoff ist beispielsweise aus der DE 27 45 527 A1 vorbekannt. Dieser Wälzlagerring besteht aus einem die Laufbahn für die Wälzkörper bildenden ersten Ring aus einem mit Chrom legierten Wälzlagerstahl und aus einem den Kernbereich des Walzlagerrings bildenden zweiten Ring aus einem korrosionsfesten Stahl mit geringem Kohlenstoffanteil. Diese beiden volumengenau zueinander ausgebildeten Ringe werden zur Verbindung miteinander konzentrisch ineinander gesteckt und radial bis zur Ausfüllung einer den Abmessungen des Lagerrings entsprechenden Kammer bei gleichzeitiger Ausbildung der Laufbahnen für die Wälzkörper durch Profilwalzen verformt. Anschließend werden die Ringe einer thermischen Behandlung unterzogen und durch Schrumpfen fest miteinander verbunden sowie abschließend durch Überdrehen und Schleifen fertig bearbeitet.

Nachteilig bei diesem Wälzlagerring aus einem Verbundwerkstoff ist es, dass die beiden Ringe aus verschiedenen Werkstoffen gemeinsam gleichzeitig tangential, radial und axial durch Walzen verformt und miteinander verbunden werden. Aus der Praxis ist es jedoch bekannt, dass insbesondere das Kaltwalzen von hochwarmfesten und verschleißfesten Werkstoffen nur begrenzt durchführbar ist, da diese Werkstoffe in der Regel über ein unterschiedliches Aufweitvermögen verfügen. Dadurch wird eine dauerhafte Verbindung der beiden Ringe problematisch, so dass auch mit dem anschließenden Schrumpfen nur in Ausnahmefällen ein fester Verbund zwischen den Ringen erreicht wird. Ebenso ist eine über die Breite der Laufbahn veränderliche, an den jeweiligen Einsatzfall des Wälzlagers angepasste Dicke der Schichten beider Werkstoffe mit der beschriebenen Herstellungsweise nicht realisierbar. Da die Ringe nicht stofflich direkt miteinander verbunden sind, hat sich somit ein solcher Verbund hinsichtlich seiner Dauerfestigkeit als nicht ausreichend erwiesen, um den hohen Anforderungen an Wälzlager in Flugzeugtriebwerken gerecht zu werden. Darüber hinaus sind zur Umsetzung des Herstellungsverfahrens für einen solchen Lagerring eine Vielzahl von Fertigungsschritten und Werkzeugen sowie mehrere geteilte Werkzeugformen notwendig, durch die relativ hohe Herstellungskosten für ein mit solchen Lagerringen ausgebildetes Wälzlager entstehen.

Eine weitere Möglichkeit zur Herstellung eines Wälzlagerrings aus einem Verbundwerkstoff wird darüber hinaus durch die DE 29 38 812 A1 offenbart. Bei dem in dieser Druckschrift beschriebenen Wälzlagerring besteht der die Laufbahn für die Wälzkörper bildende erste Ring ebenfalls aus einem mit Chrom legierten Wälzlagerstahl, der durch Stanzen und Ziehen eines entsprechenden Blechstreifens hergestellt wird. Der den Kernbereich des Wälzlagerrings bildende zweite Ring besteht dagegen aus einem Metallpulver, das zur Verbindung mit dem ersten Ring zusammen mit diesem in eine Form eingefüllt und unter Druck und bei Temperaturen zwischen 300°C und 700°C in einer Presse verdichtet wird. Anschließend wird der entstandene Rohling in einem Ofen bei Temperaturen zwischen 1100°C und 1200°C gesintert sowie in sauerstofffreier Atmosphäre auf 950°C bis 1000°C abgekühlt und abschließend wird durch Gesenkschmieden oder durch Walzen die Laufbahn für die Wälzkörper in den Wälzlagerring eingeformt.

Bei einem nach diesem Verfahren hergestellten Wälzlagerring sind die beiden Ringe des Werkstoffverbundes zwar durch den Sintervorgang auch stofflich miteinander verbunden, jedoch ist auch hier durch die Verwendung eines gestanzten Blechteils für den Laufbahnbereich die Schichtdicke dieser Laufbahn weitgehend konstant und kann nicht in wünschenswerter Weise in ihrer Stärke über die Breite der Laufbahn variiert werden. Ebenso ist auch bei diesem Werkstoffverbund das abschließende gemeinsame Walzen oder Schmieden des warmfesten und des verschleißfesten Werkstoffes für den Kernbereich und für den Laufbahnbereich fertigungstechnisch nur sehr aufwändig umsetzbar. Darüber hinaus hat sich der Aufwand für die Herstellung eines solchen Werkstoffverbundes in der Praxis als unwirtschaftlich erwiesen, insbesondere deshalb, da für jeden einzelnen Lagerring eine gesonderte Form zum Verdichten und zum Sintern des Metallpulvers zur Verfügung stehen muss sowie durch den aufwändigen Verdichtungs- und Abkühlungsprozess des Sintermetalls.

### Aufgabe der Erfindung

Ausgehend von den dargelegten Nachteilen der Lösungen des bekannten Standes der Technik liegt der Erfindung deshalb die Aufgabe zu Grunde, einen Wälzlagerring, insbesondere für hochbeanspruchte Wälzlager in Flugzeugtriebwerken, zu konzipieren, der aus einem dauerfesten Verbund zweier Schichten aus einem Stahl mit sehr hoher Härte und Verschleißfestigkeit für den Bereich seiner Laufbahn und aus einem Stahl mit hoher Zähigkeit für seinen Kernbereich besteht und dabei mit einer weitestgehend variablen Schichtstärke der Laufbahn über die Laufbahnbreite ausgebildet ist und welcher sich durch eine kostengünstige Herstellung auszeichnet.

### Beschreibung der Erfindung

Erfindungsgemäß wird diese Aufgabe bei einem Wälzlagerring nach dem Oberbegriff des Anspruchs 1 derart gelöst, dass als Werkstoff für die Laufbahn der Wälzkörper ein pulvermetallurgischer Schnellarbeitsstahl mit hohem Gehalt an karbidbildenden Legierungselementen und einem hohen Kohlenstoffgehalt vorgesehen ist, während der Werkstoff für den Kernbereich des Wälzlagerrings aus einem Warmarbeitsstahl mit im Vergleich zum Laufbahnwerkstoff niedrigem Gehalt an karbidbildenden Legierungselementen und niedrigem Kohlenstoffgehalt besteht, und dass beide Werkstoffe durch Diffusionsschweißen stoffschlüssig miteinander verbunden sind.

Der Erfindung liegt somit die Erkenntnis zu Grunde, dass durch Diffusionsschweißen verschleißfeste Werkstoffverbunde mit hoher Warmhärte hergestellt werden können, die den unterschiedlichen Anforderungen an die Laufbahn und den Kernbereich eines hochbelasteten Wälzlagers nahezu optimal gerecht werden. Ein pulvermetallurgischer Schnellarbeitsstahl als Werkstoff für die Laufbahn der Wälzkörper weist nach geeigneter Wärmebehandlung durch den hohen Gehalt an Hartphasen (Karbide) eine im Vergleich zum aufgekohlten Einsatzstahl M50 NiL wesentlich bessere Verschleißfestigkeit auf. Wegen der sehr feinen homogenen Mikrostruktur ist dabei trotz des hohen Karbidgehaltes die Überrollfestigkeit des Laufbahnbereiches sehr hoch. Auch eine nachträgliche Verdichtung des Verbundes ist nicht notwendig, da durch die simultane Einwirkung von hoher Temperatur und hohem Druck Werkstoffe ohne Restporösität erzeugt werden. Der Warmarbeitsstahl für den Kernbereich des Wälzlagerrings lässt sich darüber hinaus bezüglich seiner Zusammensetzung abweichend vom Laufbahnwerkstoff auf hohe Zähigkeit abstimmen, muss aber bezüglich seines Härteverhaltens an den Härteprozess für den Laufbahnwerkstoff angepasst werden.

Bevorzugte Ausgestaltungen und Weiterbildungen des erfindungsgemäß ausgebildeten Wälzlagerrings werden in den Unteransprüchen beschrieben.

Danach ist es gemäß der Ansprüche 2 und 3 vorgesehen, dass der Werkstoff für die Laufbahn der Wälzkörper bevorzugt durch den Schnellarbeitsstahl S 10-2-5-8 PM gebildet wird, der mehrr als 5 % Legierungsbestandteile Cr, Mo, W und V aufweist und dessen Kohlenstoffgehalt größer als 0,8 % ist, während der Werkstoff für den Kernbereich des Wälzlagerrings bevorzugt durch den Warmarbeitsstahl X40CrMoV5-1 gebildet wird, der weniger als 12 % Legierungsbestandteile Cr, Mo, W und V aufweist und dessen Kohlenstoffgehalt kleiner als 0,5 % ist.

Die gestellte Aufgabe wird darüber hinaus auch durch ein erfindungsgemäßes Verfahren zur Herstellung eines Wälzlagerrings mit den beschriebenen Merkmalen gelöst, welches nachfolgend am Beispiel der Herstellung eines Wälzlagerinnenrings bzw. eines Wälzlageraußenrings beschrieben wird:

Für die Herstellung von Wälzlagerinnenringen wird als Ausgangsmaterial für den Kernbereich bevorzugt ein stangenförmiger Stahlzylinder aus dem Warmarbeitsstahl X40CrMoV5-1 verwendet, während das Ausgangsmaterial für die Herstellung von Wälzlageraußenringen bevorzugt durch ein dickwandiges Stahlrohr aus dem gleichen Material gebildet wird. Als Hilfswerkzeug wird darüber hinaus eine dünnwandige zylindrische Stahlkapsel von der Höhe des Stahlzylinders bzw. des Stahlrohres benötigt, in die im Fall der Herstellung von Wälzlagerinnenringen der Stahlzylinder zentrisch bzw. im Fall der Herstellung von Wälzlageraußenringen das Stahlrohr konzentrisch an der Innenseite der Stahlkapsel anliegend eingesetzt wird. Anschließend wird der Raum zwischen dem Stahlzylinder und der Innenseite der Stahlkapsel bzw. der Hohlraum des Stahlrohres mit dem in Pulverform vorliegenden Schnellarbeitsstahl S 10-2-5-8 PM des Laufbahnwerkstoffs befüllt und manuell verdichtet.

Die so vorbereitete Stahlkapsel wird dann an ihrem offenen Ende verschlossen und gegebenenfalls evakuiert und in einem geeigneten Ofen gleichzeitig einem Druck von ca. 1000 bar und einer Temperatur von 1000°C bis 1200°C ausgesetzt. Durch diesen als Diffusionsschweißen mittels heißtisostatischem Pressen bezeichneten Vorgang erfolgt das Sintern des Metallpulvers des Laufbahnwerkstoffs zu einem dichten Material sowie gleichzeitig eine stofflich Verbindung des gesinterten Metalls mit dem Stahlzylinder oder dem Stahlrohr des Kernbereichs.

Nach der Abkühlung des entstandenen Verbundrohlings auf Raumtemperatur und der Entfernung der Stahlkapsel wird der Verbundrohling dann auf einem Drehautomaten mit einer zentrischen Bohrung versehen und gleichzeitig in einzelne Verbundringe zerspant. Bei der Herstellung von Wälzlagerinnenringen wird die Bohrung dabei in den Werkstoff des Kernbereichs eingearbeitet, während diese bei der Herstellung von Wälzlageraußenringen in den Werkstoff der Laufbahn eingearbeitet wird.

Anschließend wird in den Laufbahnwerkstoff des durch die Zerspanung entstandenen Verbundrings durch Walzen zwischen zwei Profilwalzen eine Laufbahnrinne eingearbeitet, wobei das Einwalzen dieser Laufbahnrinne die Aufgabe hat, im gesamten Bereich der späteren Laufbahn bzw. über deren gesamte Breite eine optimale Schichtstärke des Laufbahnwerkstoffes zu schaffen.

Danach erfolgt dann die Herstellung der annähernden Außenkontur des Wälzlagerringes durch Zerspanen des Verbundrings mit abschließendem Härten und Schleifen auf endgültige Lagerringabmessungen. Das Härten des Wälzlagerrings erfolgt dabei bevorzugt bei einer Temperatur zwischen 1000°C und 1200°C, so dass der Laufbahnwerkstoff eine Härte von mindestens 750 HV und der Kernwerkstoff eine Härte von mindestens 500 HV aufweist.

Der nach diesem Verfahren hergestellte, erfindungsgemäß ausgebildete Wälzlagerring weist somit gegenüber den aus dem Stand der Technik bekannten Wälzlagerringen den Vorteil auf, dass er aus einem dauerfesten Verbund zweier Schichten aus einem Stahl mit sehr hoher Härte und Verschleißfestigkeit für den Bereich seiner Laufbahn und aus einem Stahl mit hoher Zähigkeit für seinen Kernbereich besteht und durch einen gezielten Profilwalzvorgang mit einer weitestgehend variablen Schichtstärke der Laufbahn über die Laufbahnbreite ausgebildet werden kann. Dabei wird durch das Diffusionsschweißen mittels heißisostatischem Pressen nicht nur der pulvermetallurgischer Schnellarbeitsstahl für den Laufbahnbereich gesintert sondern gleichzeitig eine stoffliche Verbindung zum Werkstoff des Kernbereichs erreicht, durch die der hergestellte Wälzlagerring auf jeden Fall den hohen Anforderungen an Wälzlager in Flugzeugtriebwerken gerecht wird. Durch relativ kostengünstige Ausgangsmaterialien, einfache Hilfsvorrichtungen und mäßigen Fertigungsaufwand zeichnet sich der erfin-dungsgemäß ausgebildete Wälzlagerring trotz einzelner spanabhebender Fertigungsschritte insgesamt auch durch eine kostengünstige Herstellung aus.

### Kurze Beschreibung der Zeichnungen

Eine bevorzugte Ausführungsform eines erfindungsgemäß ausgebildeten Wälzlagerrings sowie des Verfahrens zu dessen Herstellung wird nachfolgend unter Bezugnahme auf die beigefügten Zeichnungen näher erläutert. Dabei zeigen:
- Figur 1: einen Längsschnitt durch ein als Dreipunkt-Kugellager ausgebildetes Hauptwellenlager eines Flugzeugtriebwerkes;
- Figur 2: eine vergrößerte Darstellung eines Querschnittes durch das Dreipunkt-Kugellager nach Figur 1;
- Figur 3: eine schematische Darstellung der Verfahrensschritte a) bis c) zur Herstellung eines erfindungsgemäß ausgebildeten inneren Wälzlagerrings für das Dreipunkt-Kugellager nach Figur 1;
- Figur 4: eine schematische Darstellung des Verfahrensschritts d) zur Herstellung eines erfindungsgemäß ausgebildeten inneren Wälzlagerrings für das Dreipunkt-Kugellager nach Figur 1;
- Figur 5: eine schematische Darstellung des Verfahrensschritts e) zur Herstellung eines erfindungsgemäß ausgebildeten inneren Wälzlagerrings für das Dreipunkt-Kugellager nach Figur 1;
- Figur 6: eine schematische Darstellung des Verfahrensschritts f) zur Herstellung eines erfindungsgemäß ausgebildeten inneren Wälziagerrings für das Dreipunkt-Kugellager nach Figur 1;
- Figur 7: eine vergrößerte Darstellung eines Querschnittes durch einen fertig bearbeiteten, erfindungsgemäß ausgebildeten inneren Wälzlagerring für das Dreipunkt-Kugellager nach Figur 1;
- Figur 8: eine graphische Darstellung des Härteverlaufs durch einen erfindungsgemäß ausgebildeten inneren Wälzlagerring für das Dreipunkt-Kugellager nach Figur 1.

### Ausführliche Beschreibung der Zeichnungen

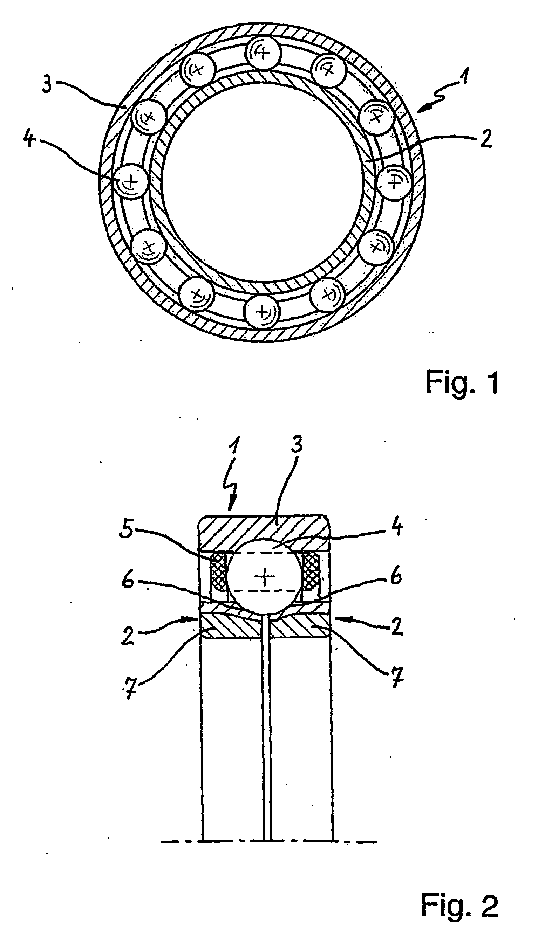

Aus den Figuren 1 und 2 geht deutlich ein als Dreipunkt-Kugellager ausgebildetes Wälzlager 1 hervor, wie es beispielsweise zur Hauptwellenlagerung in Flugzeugtriebwerken verwendet wird. Dieses Wälzlager 1 besteht in bekannter Weise aus einem zweigeteilten inneren Wälzlagerring 2 und einem einteiligen äußeren Wälzlagerring 3 sowie einer Vielzahl zwischen den Wälzlagerringen 2, 3 abrollender Wälzkörper 4, die durch einen Lagerkäfig 5 in gleichmäßigen Abständen zueinander gehalten werden. Desweiteren ist in Figur 2 angedeutet, dass zumindest der innere Wälzlagerring 2 des Wälzlagers 1 aus einem festen Verbund zweier Schichten aus verschiedenen metallischen Werkstoffen besteht, wobei der Bereich der Laufbahn 6 für die Wälzkörper 4 aus einem Stahl mit sehr hoher Härte und Verschleißfestigkeit und der Kernbereich 7 des Wälzlagerrings 2 aus einem Stahl mit hoher Zähigkeit gebildet wird.

Um den hohen Anforderungen an einen solchen Wälzlagerring 2 hinsichtlich Temperaturbeständigkeit, Verschleißfestigkeit und Zähigkeit gerecht zu werden, ist dabei erfindungsgemäß als Werkstoff für die Laufbahn 6 der Wälzkörper 4 ein pulvermetallurgischer Schnellarbeitsstahl mit hohem Gehalt an karbidbildenden Legierungselementen und einem hohen Kohlenstoffgehalt vorgesehen, während der Werkstoff für den Kernbereich 7 des Wälzlagerrings 2 aus einem Warmarbeitsstahl mit im Vergleich zum Laufbahnwerkstoff 11 niedrigem Gehalt an karbidbildenden Legierungselementen und niedrigem Kohlenstoffgehalt besteht. Beide Werkstoffe sind erfindungsgemäß durch Diffusionsschweißen stoffschlüssig miteinander verbunden, wobei der Werkstoff für die Laufbahn 6 der Wälzkörper 4 durch den Schnellarbeitsstahl S 10-2-5-8 PM gebildet wird, der mehr als 5 % Legierungsbestandteile Cr, Mo, W und V und mehr als 0,8 % Kohlenstoffgehalt aufweist, während der Werkstoff für den Kernbereich 7 des Wälzlagerrings 2 durch den Warmarbeitsstahl X40CrMoV5-1 gebildet wird, der weniger als 12 % Legierungsbestandteile Cr, Mo, W und V und weniger als 0,5 % Kohlenstoffgehalt aufweist.

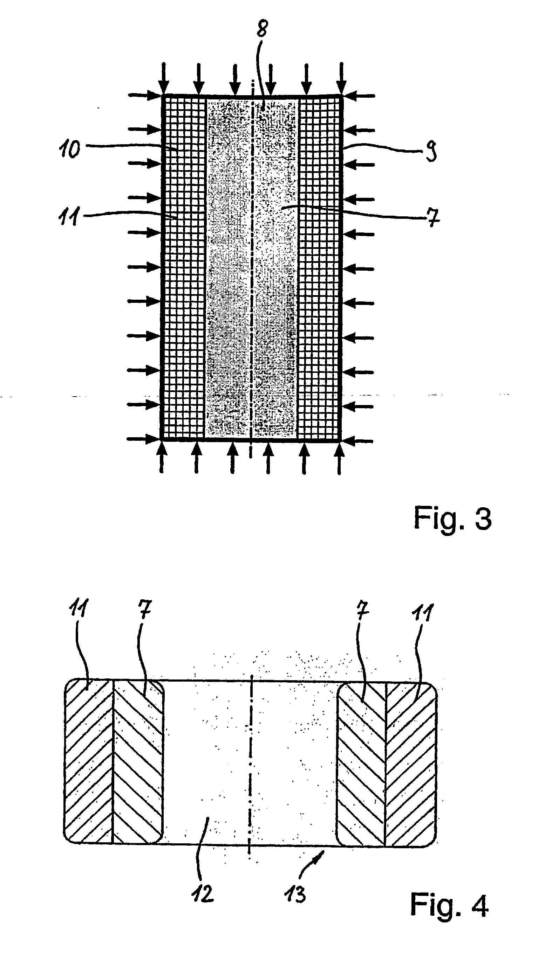

Anhand der Figuren 3 bis 8 soll nachfolgend nunmehr beispielhaft das Verfahren zur Herstellung eines erfindungsgemäß ausgebildeten inneren Wälzlagerrings 2 erläutert werden.

Aus Figur 3 geht dabei hervor, dass zunächst ein Stahlzylinder 8 aus dem Werkstoff des Kernbereichs 7 des Wälzlagerrings 2 in eine dünnwandige zylindrische Stahlkapsel 9 eingesetzt und anschließend der Hohlraum 10 zwischen dem Stahlzylinder 8 und der Stahlkapsel 9 mit dem Metallpulver des Laufbahnwerkstoffs 11 aufgefüllt und manuell verdichtet wird. Danach erfolgt mit der so vorbereiteten Stahlkapsel 9 das Sintern des Laufbahnwerkstoffs 11 und das gleichzeitige stoffliche Verbinden desselben mit dem Stahlzylinder 8 durch Diffusionsschweißen mittels heißtisostatischem Pressen. Dabei wird die Stahlkapsel 9 einem hohen, in Figur 3 durch Pfeile angedeuteten Druck von ca. 1000 bar und einer Temperatur von 1000°C bis 1200°C ausgesetzt, so dass sich das Metallpulver des Laufbahnwerkstoffs 11 zu einem Sinterstahl verdichtet und sich zugleich mit dem Stahl des Kernbereichs 7 verbindet.

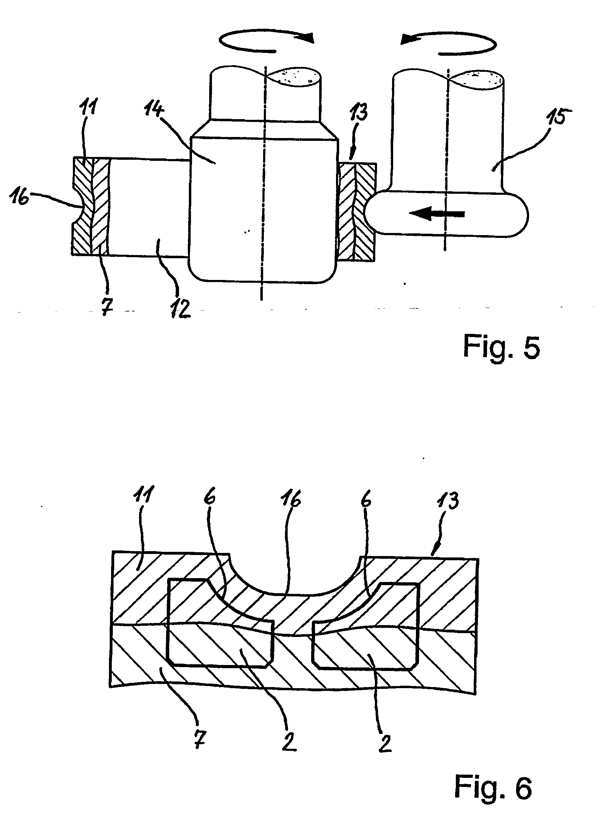

Nach der Abkühlung des entstandenen Verbundrohlings erfolgt dann auf einem Drehautomaten das Einarbeiten einer zentrischen Bohrung 12 in den Werkstoff des Kernbereichs 7 und die Zerspanung des Verbundrohlings in einzelne Verbundringe 13, von denen ein Verbundring 13 beispielhaft in Figur 4 abgebildet ist. Durch die Bohrung 12 kann dann, wie in Figur 5 dargestellt, in den Laufbahnwerkstoff 11 jedes Verbundringes 13 durch Walzen zwischen zwei Profilwalzen 14, 15 eine Laufbahnrinne 16 eingearbeitet werden, durch die, wie in der vergrößerten Darstellung in Figur 6 zu sehen ist, über die gesamte Breite der angedeutet dargestellten späteren Laufbahn 6 des Wälzlagerrings 2 eine optimale Schichtstärke des Laufbahnwerkstoffes 11 geschaffen wird.

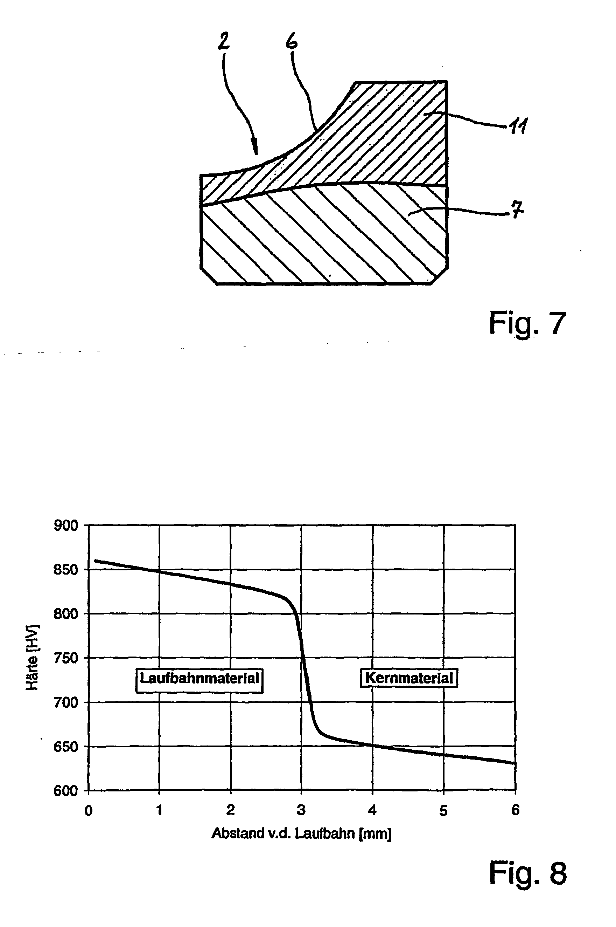

Abschließend erfolgt dann die Herstellung der annähernden Außenkontur des in Figur 7 einzeln dargestellten Wälzlagerringes 2 durch Zerspanen des Verbundrings 13 und das Fertigbearbeiten des Wälzlagerrings 2 durch Härten bei einer Temperatur zwischen 1000°C und 1200°C, sowie das Schleifen auf endgültige Lagerringabmessungen. Das in Figur 8 abgebildete Härtediagramm verdeutlicht dabei, dass der Laufbahnwerkstoff 11 nach dem Härten eine Härte von ca. 870 HV aufweist, die mit zunehmender Tiefe leicht abnimmt und im Übergangsbereich zwischen dem Laufbahnwerkstoff 11 und dem Werkstoff des Kernbereichs 7 stark abfällt. Der Werkstoff des Kernbereichs 7 weist dann nach dem Übergangsbereich eine Härte von ca. 670 HV auf, die in Richtung Innenseite des Wälzlagerrings 2 noch leicht auf eine Härte von ca. 630 HV absinkt.

### Bezugszahlenliste

- 1: Wälzlager
- 2: innerer Wälzlagerring
- 3: äußerer Wälzlagerring
- 4: Wälzkörper
- 5: Lagerkäfig
- 6: Laufbahn
- 7: Kernbereich
- 8: Stahlzylinder
- 9: Stahlkapsel
- 10: Hohlraum
- 11: Laufbahnwerkstoff
- 12: Bohrung
- 13: Verbundring
- 14: Walze
- 15: Walze
- 16: Laufbahnrinne

## Patentansprüche

1. Wälzlagerring, insbesondere für hochbeanspruchte Wälzlager in Flugzeugtriebwerken, welcher aus einem festen Verbund zweier Schichten aus verschiedenen metallischen Werkstoffen besteht, wobei der Bereich der Laufbahn (6) für die Wälzkörper (4) aus einem Stahl mit sehr hoher Härte und Verschleißfestigkeit und der Kernbereich (7) des Wälzlagerrings (2) aus einem Stahl mit hoher Zähigkeit besteht, **dadurch gekennzeichnet, dass** als Werkstoff für die Laufbahn (6) der Wälzkörper (4) ein pulvermetallurgischer Schnellarbeitsstahl mit hohem Gehalt an karbidbildenden Legierungselementen und einem hohen Kohlenstoffgehalt vorgesehen ist, während der Werkstoff für den Kernbereich (7) des Wälzlagerrings (2) aus einem Warmarbeitsstahl mit im Vergleich zum Laufbahnwerkstoff (11) niedrigem Gehalt an karbidbildenden Legierungselementen und niedrigem Kohlenstoffgehalt besteht, und dass beide Werkstoffe durch Diffusionsschweißen stoffschlüssig miteinander verbunden sind.

2. Wälzlagerring nach Anspruch 1, **dadurch gekennzeichnet, dass** der Werkstoff für die Laufbahn (6) der Wälzkörper (4) bevorzugt durch den Schnellarbeitsstahl S 10-2-5-8 PM gebildet wird, der mehr als 5 % Legierungsbestandteile Cr, Mo, W und V aufweist und dessen Kohlenstoffgehalt größer als 0,8 % ist.

3. Wälzlagerring nach Anspruch 1, **dadurch gekennzeichnet, dass** der Werkstoff für den Kernbereich (7) des Wälzlagerrings (2) bevorzugt durch den Warmarbeitsstahl X40CrMoV5-1 gebildet wird, der weniger als 12 % Legierungsbestandteile Cr, Mo, W und V aufweist und dessen Kohlenstoffgehalt kleiner als 0,5 % ist.

4. Verfahren zur Herstellung eines Wälzlagerrings mit den Merkmalen des Anspruchs 1, **gekennzeichnet durch** folgende Verfahrensschritte:
a.) Zentrisches Einsetzen eines Stahlzylinders (8) oder konzentrisches Einsetzen eines Stahlrohres aus dem Werkstoff des Kernbereichs (7) des Wälzlagerrings (2) in eine dünnwandige zylindrische Stahlkapsel (8);
b.) Auffüllen des Hohlraumes (10) zwischen dem Stahlzylinder (8) und der Stahlkapsel (9) oder des Hohlraumes des Stahlrohres mit dem Metallpulver des Laufbahnwerkstoffs (11) und Verdichten desselben;
c.) Sintern des Laufbahnwerkstoffs (11) und gleichzeitiges Verbinden desselben mit dem Stahlzylinder (8) oder mit dem Stahlrohr des Kernbereichs (7) **durch** Diffusionsschweißen mittels heißtisostatischem Pressen;
d.) Einarbeiten einer zentrischen Bohrung (12) in den Werkstoff des Kernbereichs (7) oder in den Laufbahnwerkstoff und Zerspanung des Verbundrohlings in einzelne Verbundringe (13);
e.) Einarbeiten einer Laufbahnrinne (16) in den Laufbahnwerkstoff (11) bei gleichzeitiger Vertiefung der Schichtstärke desselben **durch** Walzen des Verbundringes (13) zwischen zwei Profilwalzen (14, 15);
f.) Herstellung der annähernden Außenkontur des Wälzlagerringes (2) durch Zerspanen des Verbundrings (13) mit anschließendem Härten und Schleifen auf endgültige Lagerringabmessungen.

5. Verfahren zur Herstellung eines Wälzlagerrings nach Anspruch 4, **dadurch gekennzeichnet, dass** das Sintern und gleichzeitige Diffusionsschweißen der beiden Wekstoffe für die Laufbahn (6) und für den Kernbereich (7) des Wälzlagerrings (2) durch heißisostatisches Pressen bevorzugt bei einem Druck von ca 1000 bar und bei einer Temperatur von 1000°C bis 1200°C erfolgt.

6. Verfahren zur Herstellung eines Wälzlagerrings nach Anspruch 4, **dadurch gekennzeichnet, dass** das abschließende Härten des Wälzlagerrings (2) bevorzugt bei einer Temperatur zwischen 1000°C und 1200°C erfolgt, so dass der Laufbahnwerkstoff (11) eine Härte von mindestens 750 HV und der Werkstoff des Kernbereichs (7) eine Härte von mindestens 500 HV aufweist.

## Claims

1. Rolling bearing ring, in particular for highly-loaded rolling bearings in aircraft power plants, which rolling bearing ring is composed of a fixed composite of two layers composed of different metallic materials, with the region of the raceways (6) for the rolling bodies (4) being composed of a steel with a very high level of hardness and wear resistance, and the core region (7) of the rolling bearing ring (2) being composed of a steel with a high level of ductility, **characterized in that** a powder metallurgical high-speed steel with a high content of carbide-forming alloy elements and a high carbon content is provided as a material for the raceway (6) of the rolling bodies (4), while the material for the core region (7) of the rolling bearing ring (2) is composed of a hot-work steel with a lower content of carbide-forming alloy elements, and a lower carbon content, than the raceway material (11), and **in that** the two materials are cohesively connected to one another by means of diffusion welding.

2. Rolling bearing ring according to Claim 1,
**characterized in that** the material for the raceway (6) of the rolling bodies (4) is preferably formed by the high-speed steel S 10-2-5-8 PM which has more than 5% alloy constituents Cr, Mo, W and V and whose carbon content is greater than 0.8%.

3. Rolling bearing ring according to Claim 1,
**characterized in that** the material for the core region (7) of the rolling bearing ring (2) is preferably formed by the hot-work steel X40CrMoV5-1 which has less than 12% alloy constituents Cr, Mo, W and V and whose carbon content is less than 0.5%.

4. Method for producing a rolling bearing ring having the features of Claim 1, **characterized by** the following method steps:
a) centrally inserting a steel cylinder (8) or concentrically inserting a steel tube composed of the material of the core region (7) of the rolling bearing ring (2) into a thin-walled cylindrical steel capsule (8);
b) filling the cavity (10) between the steel cylinder (8) and the steel capsule (9) or the cavity of the steel tube with the metal powder of the raceway material (11) and compressing said metal powder;
c) sintering the raceway material (11) and simultaneously connecting the latter to the steel cylinder (8) or to the steel tube of the core region (7) by means of diffusion welding by means of hot isostatic pressing;
d) machining a central bore (12) into the material of the core region (7) or into the raceway material and cutting the composite blank into individual composite rings (13);
e) machining a raceway groove (16) into the raceway material while simultaneously deepening the layer thickness of the latter by rolling the composite ring (13) between two profile rollers (14, 15);
f) producing the approximate outer contour of the rolling bearing ring (2) by cutting the composite ring (13) with subsequent hardening and grinding to the final bearing ring dimensions.

5. Method for producing a rolling bearing ring according to Claim 4, **characterized in that** the sintering and simultaneous diffusion welding of the two materials for the raceway (6) and for the core region (7) of the rolling bearing ring (2) by means of hot isostatic pressing preferably takes place at a pressure of approximately 1000 bar and at a temperature of 1000°C to 1200°C.

6. Method for producing a rolling bearing ring according to Claim 4, **characterized in that** the subsequent hardening of the rolling bearing ring (2) preferably takes place at a temperature between 1000°C and 1200°C, so that the raceway material (11) has a hardness of at least 750 HV and the material of the core region (7) has a hardness of at least 500 HV.

## Revendications

1. Bague de roulement, destinée en particulier à des roulements soumis à de fortes contraintes dans des réacteurs d'avions, qui est constituée d'un composite solide de deux couches en matériaux métalliques différents, dans laquelle la région de la piste de roulement (6) pour les corps de roulement (4) se compose d'un acier présentant une dureté et une résistance à l'usure très élevées et la région de noyau (7) de la bague de roulement (2) se compose d'un acier à haute ductilité, **caractérisée en ce qu'**il est prévu, comme matériau destiné à la piste de roulement (6) des corps de roulement (4), un acier à coupe rapide obtenu par la métallurgie des poudres et présentant une teneur élevée en éléments d'alliage formateurs de carbures et une haute teneur en carbone, tandis que le matériau destiné à la région de noyau (7) de la bague de roulement (2) se compose d'un acier pour travail à chaud présentant, par comparaison avec le matériau (11) destiné à la piste de roulement, une faible teneur en éléments d'alliage formateurs de carbures et une faible teneur en carbone, et **en ce que** les deux matériaux sont assemblés l'un à l'autre en complémentarité de matière par un procédé de soudage par diffusion.

2. Bague de roulement selon la revendication 1, **caractérisé en ce que** le matériau destiné à la piste de roulement (6) des corps de roulement (4) est formé de préférence par l'acier à coupe rapide S 10-2-5-8 PM, qui présente plus de 5 % de composants d'alliage Cr, Mo, W et V et dont la teneur en carbone est supérieure à 0,8 %.

3. Bague de roulement selon la revendication 1, **caractérisée en ce que** le matériau destiné à la région de noyau (7) de la bague de roulement (2) est formé de préférence par l'acier pour travail à chaud X40CrMoV5-1, qui présente moins de 12 % de composants d'alliage Cr, Mo, W et V, et dont la teneur en carbone est inférieure à 0,5 %.

4. Procédé pour la fabrication d'une bague de roulement présentant les caractéristiques de la revendication 1, **caractérisé par** les étapes suivantes:
a) placement central d'un cylindre en acier (8) ou placement concentrique d'un tube d'acier constitué du matériau destiné à la région de noyau (7) de la bague de roulement (2), dans une enveloppe cylindrique en acier à paroi mince (9);
b) remplissage de l'espace creux (10) entre le cylindre en acier (8) et l'enveloppe en acier (9) ou de l'espace creux du tube d'acier avec la poudre métallique du matériau (11) destiné la piste de roulement, et compression de celle-ci;
c) frittage du matériau (11) destiné à la piste de roulement et liaison simultanée de celui-ci au cylindre en acier (8) ou au tube d'acier de la région de noyau (7) par soudage par diffusion au moyen d'une opération de compactage isostatique à chaud;
d) usinage de l'alésage central (12) dans le matériau destiné à la région de noyau (7) ou dans le matériau destiné à la piste de roulement et coupe de l'ébauche composite en bagues composites individuelles (13);
e) usinage d'un canal de roulement (16) dans le matériau (11) destiné à la piste de roulement avec enfoncement simultané de l'épaisseur de couche de celui-ci par laminage de la bague composite (13) entre deux cylindres de profilage (14, 15);
f) réalisation du contour extérieur approximatif de la bague de roulement (2) par usinage de la bague composite (13) suivie de durcissement et de meulage aux dimensions définitives de la bague de roulement.

5. Procédé pour la fabrication d'une bague de roulement selon la revendication 4, **caractérisé en ce que** le frittage et le soudage par diffusion simultané des deux matériaux destinés à la piste de roulement (6) et à la région de noyau (7) de la bague de roulement (2) par compactage isostatique à chaud sont effectués de préférence sous une pression d'environ 1000 bars et à une température de 1000°C à 1200°C.

6. Procédé pour la fabrication d'une bague de roulement selon la revendication 4, **caractérisé en ce que** le durcissement final de la bague de roulement (2) est effectué de préférence à une température comprise entre 1000°C et 1200°C, de telle manière que le matériau (11) destiné à la piste de roulement présente une dureté d'au moins 750 HV et le matériau destiné à la région de noyau (7) une dureté d'au moins 500 HV.
